Europäisches Patentamt

European Patent Office

Office européen des brevets

(11) Veröffentlichungsnummer: **0 258 520**
**A2**

## (12) EUROPÄISCHE PATENTANMELDUNG

(21) Anmeldenummer: **87101834.7**

(51) Int. Cl.⁴: **G02B 6/44**

(22) Anmeldetag: **10.02.87**

(30) Priorität: **17.07.86 DE 3624124**

(43) Veröffentlichungstag der Anmeldung:
**09.03.88 Patentblatt 88/10**

(84) Benannte Vertragsstaaten:
**AT BE CH FR GB IT LI NL SE**

(71) Anmelder: **Kabelmetal electro Gesellschaft
mit beschränkter Haftung
Kabelkamp 20 Postfach 260
D-3000 Hannover 1(DE)**

(72) Erfinder: **Rohner, Peter, Dr.rer.nat.
Eschenkamp 12
D-3004 Isernhagen 4(DE)**

(74) Vertreter: **Döring, Roger, Dipl.-Ing. et al
Kabelkamp 20
D-3000 Hannover 1(DE)**

(54) **Nachrichtenkabel mit Lichwellenleitern.**

(57) Es wird wird ein Nachrichtenkabel mit Lichtwellenleitern angegeben, die in Bandleitungen zusammengefaßt sind. In den Bandleitungen sind die Lichtwellenleiter nur an in axialer Richtung hintereinander liegenden und voneinander getrennten Befestigungsstellen festgelegt. Die Bandleitungen sind an den Befestigungsstellen beispielsweise farblich gekennzeichnet. Die Kennzeichnung ist für eine Bandleitung über ihre ganze Länge identisch. Alle in dem Kabel angeordneten Bandleitungen sind unterschiedlich gekennzeichnet.

EP 0 258 520 A2

Die Erfindung bezieht sich auf ein Nachrichtenkabel mit Lichtwellenleitern und zugfestem Mantel, in dessen von dem Mantel umgebener Seele mindestens zwei Bandleitungen angebracht sind, in denen die Lichtwellenleiter parallel zueinander verlaufend angeordnet und durch Befestigungselemente zusammengehalten sind (DE-OS 28 15 514).

Lichtwellenleiter - im folgenden kurz als "LWL" bezeichnet - sind fertige Gebilde aus Glasfasern, die ohne zusätzliche Bearbeitung zur Übertragung von Lichtwellen geeignet sind. Sie haben gegenüber den in der Nachrichtentechnik bisher üblichen metallischen Leitern Vorteile. Die LWL sind sehr breitbandig und dämpfungsarm, so daß über einen Leiter mehr Kanäle bei vergrößertem Verstärkerabstand übertragen werden können. Sie sind gut biegbar und haben kleine Durchmesser, so daß der Kabelquerschnitt verringert werden kann. Ferner treten keine Beeinflussungen durch äußere elektrische und magnetische Störfelder auf.

Zum Einsatz der LWL für Übertragungszwecke der Nachrichtentechnik können dieselben in LWL-Kabeln verarbeitet werden. Bei dem bekannten LWL-Kabel nach der eingangs erwähnten DE-OS 28 15 514 sind die LWL dazu in einer Vorfertigung in Bandleitungen zusammengefaßt, in denen sie über ihre ganze Länge mit einem bandförmigen Träger verbunden sind. Der Träger stellt einen Schutz der LWL bei deren Weiterverarbeitung dar. Mindestens eine solche Bandleitung ist bei diesem bekannten LWL-Kabel in einen Mantel eingebettet, der als Profilkörper mit Armierungsdrähten ausgeführt ist. Die Bandleitung mit den LWL ist in einer in Längsrichtung verlaufenden Bohrung des Profilkörpers lose angeordnet. Wenn mehr als eine Bandleitung verwendet werden soll, dann werden die zusätzlichen Bandleitungen in weiteren Bohrungen des Profilkörpers untergebracht. In jeder Bohrung ist nur eine Bandleitung angeordnet. Bei der Durchverbindung der LWL am Ende des Kabels gibt es daher kein Problem, um die "richtige" Bandleitung zu identifizieren. Fehlverbindungen durch Vertauschen von Bandleitungen sind also nahezu ausgeschlossen. Da in jeder Bohrung des Profilkörpers nur eine Bandleitung angeordnet ist, ist die in diesem bekannten LWL-Kabel anzubringende Anzahl von LWL aber sehr beschränkt, wenn die Abmessungen des Profilkörpers und damit die Abmessungen des LWL-Kabels in üblichen Grenzen bleiben sollen. Die Herstellung dieses bekannten LWL-Kabels ist außerdem sehr aufwendig, da in einer Vorfertigung ein Profilkörper mit voneinander getrennten Bohrungen erzeugt werden muß, in welche anschließend die Bandleitungen mit den LWL eingezogen werden müssen, was nur für relativ kurze Kabellängen geht.

Der Erfindung liegt die Aufgabe zugrunde, ein LWL-Kabel anzugeben, das in herkömmlicher Technik einfach herstellbar ist, in dessen Seele eine große Anzahl von Bandleitungen mit LWL ohne trennende Elemente anbringbar ist und bei dem trotzdem Fehlverbindungen durch Vertauschen von Bandleitungen ausgeschlossen werden können.

Diese Aufgabe wird bei einem LWL-Kabel der eingangs geschilderten Art gemäß der Erfindung dadurch gelöst,

-daß die LWL in jeder Bandleitung an in Längsrichtung derselben hintereinander folgenden, voneinander getrennten Befestigungsstellen jeweils über die ganze Breite der Bandleitung durch die Befestigungselemente zusammengehalten sind,

-daß alle Befestigungselemente einer Bandleitung in gleicher Weise gekennzeichnet sind und

-daß jede Bandleitung gegenüber allen anderen in der Seele des Kabels angeordneten Bandleitungen unterschiedlich gekennzeichnete Befestigungselemente aufweist.

Dieses LWL-Kabel ist mit herkömmlichen Maschinen der Kabeltechnik herstellbar, da nur ein zugfester Mantel um eine beliebige Anzahl von Bandleitungen mit LWL herumgeformt werden muß. Wie die Bandleitungen in der Kabelseele liegen - ob geordnet oder ungeordnet, geradlinig oder gebogen - ist unerheblich. In den Bandleitungen sind die LWL nur an den in Längsrichtung beabstandeten Befestigungsstellen miteinander verbunden. Dadurch ist eine mögliche Beeinträchtigung der LWL durch die zusätzliche Fixierung auf ein Minimum reduziert, was insbesondere für die Dämpfung gilt. Die Bandleitungen sind außerdem in allen Richtungen gut biegbar, da die LWL in den Bereichen zwischen den Befestigungsstellen nicht aneinander gebunden sind, sondern einzeln gebogen werden könne. Die einzelnen Bandleitungen sind an jeder Stelle des LWL-Kabels einwandfrei zu identifizieren, da sie an den Befestigungsstellen alle unterschiedlich gekennzeichnet sind. Das kann beispielsweise durch unterschiedliche Farben erfolgen. Unabhängig von der Anzahl der in der Seele des LWL-Kabels vorhandenen Bandleitungen ist also eine Vertauschung derselben beim Durchverbinden der LWL ausgeschlossen.

Damit die LWL innerhalb einer Bandleitung leicht zu identifizieren sind, können an den Befestigungsstellen zusätzliche Markierungen angebracht werden, und zwar jeweils am gleichen Rand der Bandleitung. Von diesem Rand aus kann dann pro Bandleitung der einzelne LWL durch Abzählen gefunden werden.

Insgesamt ergibt sich der Vorteil, daß die LWL selbst alle gleich ausgeführt werden können. Es ist insbesondere keine Einfärbung oder sonstige Kennzeichnung der LWL erforderlich.

Ausführungsbeispiele des Erfindungsgegenstandes sind in den Zeichnungen dargestellt.

Es zeigen:

Fig. 1 bis 3 Querschnitte durch drei unterschiedlich aufgebaute LWL-Kabel nach der Erfindung.

Fig. 4 eine Draufsicht auf eine für das LWL-Kabel verwendbare Bandleitung in vergrößerter Darstellung.

Fig. 5 bis 7 Querschnitte durch eine Bandleitung in Höhe einer Befestigungsstelle in drei unterschiedlichen Ausführungsformen.

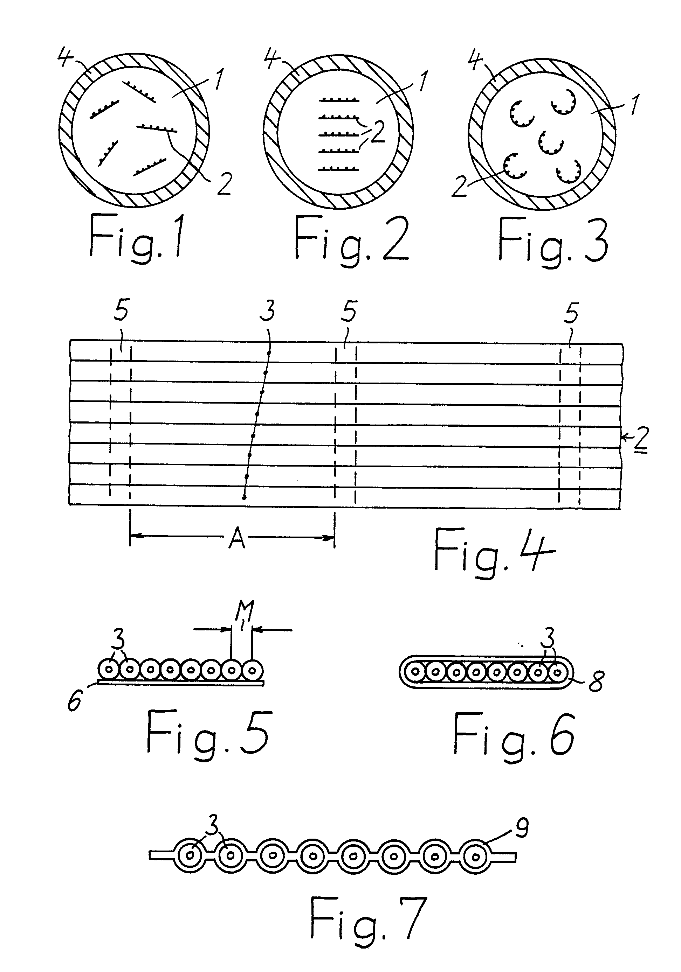

In den drei Ausführungsbeispielen nach den Fig. 1 bis 3 sind in der Seele 1 eines LWL-Kabels mehrere Bandleitungen 2 mit LWL 3 angebracht. Die Anzahl der Bandleitungen 2 ist beliebig. Sie richtet sich nach dem jeweiligen Anwendungsfall und insbesondere auch nach den zulässigen Abmessungen des LWL-Kabels. Die Seele 1 ist von einem zugfesten Mantel 4 umgeben, der mit aus der Kabelherstellung üblichen Verfahren und Vorrichtungen aufgebracht werden kann. Der Mantel 4 kann beispielsweise ein geschlossenes Metallrohr sein, das aus einem längseinlaufenden Metallband geformt und mit einer Längsnaht verschweißt wird. Ein solches Metallband kann beispielsweise aus Stahl bestehen. Es ist auch möglich, den so hergestellten Mantel 4 quer zu seiner Längsrichtung zu wellen, um demselben eine größere Biegbarkeit zu geben. Der zugfeste Mantel 4 kann aber auch aus einem dünneren, folienartigen Metallband hergestellt werden, das durch zugfeste Fäden stabilisiert ist. Solche Fäden können beispielsweise aus Stahl oder aus Polyaramid bestehen. Grundsätzlich sind der Aufbau und das Material des zugfesten Mantels 4 beliebig. Es muß nur sichergestellt sein, daß er wesentliche Zugkräfte aufnehmen kann, wie sie beispielsweise bei der Verlegung des LWL-Kabels auftreten können. Gegebenenfalls kann über dem zugfesten Mantel 4 noch eine Kunststoffschicht aufgebracht werden.

Die Bandleitungen 2 können nach Fig. 1 ungeordnet oder nach Fig. 2 geordnet in der Seele 1 des LWL-Kabels angebracht sein. Es ist auch möglich, die Bandleitungen 2 in gebogener Form nach Fig. 3 in der Seele 1 anzuordnen. In der Seele 1 können auch zusätzliche zugfeste Elemente, wie beispielsweise Poyaramidfäden, angebracht sein.

Die Bandleitungen 2 sind beispielsweise wie folgt aufgebaut:

In der Bandleitung 2 nach Fig. 4 ist eine Vielzahl von LWL 3 parallel zueinander verlaufend angeordnet. Im dargestellten Ausführungsbeispiel sind acht LWL 3 vorgesehen. Die LWL 3 sind im Verbund der Bandleitung 2 nicht über ihre gesamte Länge, sondern nur an relativ kurzen Befestigungsstellen 5 festgelegt. Die axiale Länge der Befestigungsstellen 5 verhält sich beispielsweise zu der Länge der mit "A" bezeichneten Abstände zwischen zwei solchen Befestigungsstellen 5 etwa wie 1 : 10. Es sind aber auch andere, insbesondere größere Abstände zwischen zwei Befestigungsstellen 5 möglich.

Die Art und Weise, wie die LWL 3 an den Befestigungsstellen 5 festgelegt sind, ist beliebig. Sie können unabhängig voneinander auf einem gemeinsamen Träger verklebt oder verschweißt sein. Der gemeinsame Träger kann eine Breite haben, die der Breite der Befestigungsstellen 5 entspricht. Es kann prinzipiell jedoch auch ein bandförmiger Träger verwendet werden, der über die gesamte Länge der Bandleitung 2 verläuft, auf dem die LWL 3 aber nur an den Befestigungsstellen 5 festgelegt sind.

In Fig. 5 ist ein Querschnitt durch eine Bandleitung 2 im Bereich einer Befestigungsstelle 5 dargestellt, in welcher die LWL 3 auf einem gemeinsamen Träger 6 festgelegt sind. Die Verbindung ist an jeder Befestigungsstelle 5 der Bandleitung 2 über deren gesamte Breite vorhanden, wobei die LWL 3 in den Befestigungsstellen 5 vorzugsweise in einem festen, vorgegebenen Raster nebeneinander liegen. Der Mittenabstand "M" zwischen jeweils zwei LWL 3 ist vorzugsweise über die ganze Breite der Bandleitung 2 gleichbleibend, so daß -bei acht LWL - der Abstand der Mitten der beiden äußeren LWL 3 voneinander 7 x M ist. Die LWL 3 haften bei dieser Ausführungsform nicht aneinander, sondern nur am Träger 6. Er kann aus Streifen aus einem geeigneten Kunststoff bestehen. Es kann aber auch ein anderer Werkstoff für die Streifen verwendet werden. Die Streifen verlaufen quer zur Längsrichtung der LWL 3 über die gesamte Breite der Bandleitung 2.

Der Träger 6 kann, wie bereits erwähnt, auch als Band ausgeführt sein, das sich über die gesamte Länge der Bandleitung 2 erstreckt. Dabei sind die LWL 3 nur an den Befestigungsstellen 5 fest mit dem Band verbunden, während in den zwischen den Befestigungsstellen 5 liegenden Bereichen keine Haftung zwischen den LWL 3 und dem Band vorliegt.

Nach Fig. 6 können die LWL 3 an den Befestigungsstellen 5 auch durch ein umlaufendes - schmales Band 8 festgelegt sein, das mit den LWL 3 verklebt oder verschweißt ist. Eine weitere Möglichkeit zur Festlegung der LWL 3 besteht nach Fig. 7 darin, daß an den Befestigungsstellen 5 mit Spezialwerkzeugen eine Umhüllung 9 aufgespritzt wird.

Als Befestigungselemente in den Befestigungsstellen können also beispielsweise Träger 6, Band 8 oder Umhüllung 9 dienen. Stellvertretend für alle möglichen Befestigungselemente wird in der folgenden Beschreibung das Wort "Träger" verwendet:

Eine Bandleitung 2 hat in ihrem Verlauf eine große Anzahl von Trägern, die für ein und dieselbe Bandleitung 2 als identisch gekennzeichnet sind. Das kann beispielsweise durch farbliche Kennzeichnung oder durch eine spezielle Markierung geschehen, für welche in den Träger ein bestimmtes Muster eingeprägt wird.

Jede in der Seele 1 eines LWL-Kabels vorhandene Bandleitung 2 hat nun anders gekennzeichnete Träger, so daß die Bandleitungen 2 leicht identifiziert werden können, wenn am fernen Ende die LWL 3 durchverbunden werden sollen. Die unterschiedlichen Kennzeichnungen lassen sich am einfachsten durch unterschiedliche Farben erreichen.

Zum Herausfinden des "richtigen" LWL 3 einer Bandleitung 2 beim Durchverbinden kann an den Trägern jeweils an der gleichen Stelle eine zusätzliche Markierung angebracht werden. Diese Stelle ist zweckmäßig einer der beiden Ränder der Bandleitung 2. Jeder LWL 3 kann dann durch Abzählen - beginnend an dem markierten Rand - gefunden werden. Auch diese Markierungen können durch Farbauftrag realisiert werden. Es können aber auch Einprägungen oder Aussparungen im Träger angebracht werden.

## Ansprüche

1. Nachrichtenkabel mit Lichtwellenleitern und zugfestem Mantel, in dessen von dem Mantel umgebener Seele mindestens zwei Bandleitungen angebracht sind, in denen die Lichtwellenleiter parallel zueinander verlaufend angeordnet und durch Befestigungselemente zusammengehalten sind, dadurch gekennzeichnet,
-daß die Lichtwellenleiter (3) in jeder Bandleitung (2) an in Längsrichtung derselben hintereinander folgenden, voneinander getrennten Befestigungsstellen (5) jeweils über die ganze Breite der Bandleitung (2) durch die Befestigungselemente zusammengehalten sind,
-daß alle Befestigungselemente einer Bandleitung (2) in gleicher Weise gekennzeichnet sind und
-daß jede Bandleitung (2) gegenüber allen anderen in der Seele (1) des Kabels angeordneten Bandleitungen (2) unterschiedlich gekennzeichnete Befestigungselemente aufweist.

2. Kabel nach Anspruch 1, dadurch gekennzeichnet, daß die Befestigungselemente farblich gekennzeichnet sind.

3. Kabel nach Anspruch 1, dadurch gekennzeichnet, daß die Befestigungselemente durch Markierungen gekennzeichnet sind.

4. Kabel nach einem der Ansprüche 1 bis 3, dadurch gekennzeichnet, daß an den Befestigungselementen jeweils an der gleichen Stelle eine zusätzliche Markierung angebracht ist, und zwar an einem der seitlichen Ränder der Bandleitungen (2).

5. Kabel nach einem der Ansprüche 1 bis 4, dadurch gekennzeichnet, daß die Lichtwellenleiter (3) in den Befestigungsstellen (5) jeweils in einem vorgegebenen Raster angeordnet sind.

6. Kabel nach einem der Ansprüche 1 bis 5, dadurch gekennzeichnet, daß die Lichtwellenleiter (3) an den Befestigungsstellen (5) einseitig jeweils fest mit quer zu ihrer Längsrichtung verlaufenden streifenförmigen Trägern (6) verklebt oder verschweißt sind.

7. Kabel nach einem der Ansprüche 1 bis 5, dadurch gekennzeichnet, daß die Lichtwellenleiter (3) an den Befestigungsstellen (5) in Abständen fest mit einem über die ganze Länge der Bandleitung (2) verlaufenden Band verbunden sind.

8. Kabel nach einem der Ansprüche 1 bis 5, dadurch gekennzeichnet, daß die Lichtwellenleiter (3) an den Befestigungsstellen (5) durch umlaufende Bänder (8) festgelegt sind, die mit den Lichtwellenleitern (3) verklebt oder verschweißt sind.

9. Kabel nach einem der Ansprüche 1 bis 5, dadurch gekennzeichnet, daß die Lichtwellenleiter (3) an den Befestigungsstellen (5) durch eine aufgespritzte Umhüllung (9) festgelegt sind.

Fig.1

Fig.2

Fig.3

Fig.4

Fig.5

Fig.6

Fig.7